# EUROPEAN PATENT SPECIFICATION

(11) **EP 4 446 709 B1**
(45) Date of publication and mention of the grant of the patent: **11.02.2026**
(21) Application number: 21967078.3
(22) Date of filing: 06.12.2021
(51) Int. Cl.: G01G 19/393

(54) **COMBINATION WEIGHING DEVICE**
KOMBINATIONSWIEGEVORRICHTUNG
DISPOSITIF DE PESÉE PAR COMBINAISON

(43) Date of publication of application: 16.10.2024
(73) Proprietor: Yamato Scale Co., Ltd., Akashi-shi, Hyogo 673-8688 (JP)
(72) Inventor: KITAI Takuya, Akashi-shi, Hyogo 673-8688 (JP); TANAKA Tadanobu, Akashi-shi, Hyogo 673-8688 (JP)
(74) Representative: Ter Meer Steinmeister & Partner
(86) International application number: PCT/JP2021/044713
(87) International publication number: WO 2023/105571

(56) References cited:
- EP-A1- 3 892 968
- JP-A- 2006 300 643
- JP-A- 2012 237 576
- JP-A- 2016 105 055
- JP-A- H0 749 260
- US-A- 4 630 695
- US-B1- 6 462 287

## Description

### TECHNICAL FIELD

This disclosure relates to a combination weighing apparatus that weighs and combines target articles so that the articles stay within a predetermined range of weights and then discharges the weighed articles.

### BACKGROUND ART

Conventionally, the known combination weighing apparatuses feed a plurality of weighing hoppers with articles to be weighed and perform combinatorial computations. In the combinatorial computations, weights of the articles in the weighing hoppers are variously combined, and a combination of weighing hoppers is selected that contain the articles of a combination weight, i.e., summed weight of the variously combined articles, that stays within a predetermined range of weights decided based on a target combination weight. These weighing hoppers are selected for an optimal combination of weighing hoppers from which the articles should be discharged.

Among such combination weighing apparatuses are horizontal-type combination weighing apparatuses. The horizontal-type combination weighing apparatus may be equipped with, for example, a plurality of weighing hoppers, a plurality of supply hoppers (pooling hoppers) that feed the weighing hoppers with articles to be weighed, and feeders that vibrate and transport the articles into the supply hoppers, in which these weighing hoppers, supply hoppers and feeders are horizontally arranged in a row next to one another (for example, patent literature 1).
US 4,630,695 A discloses a combinatorial weigher employing double group split logic.

### CITATION LIST

### PATENT LITERATURE

| | |
|---|---|
| Patent literature 1: | Japanese Laid-Open Patent Application No. H07 (1995)-49260 |

### SUMMARY OF THE INVENTION

### TECHNICAL PROBLEMS

In the combination weighing apparatus described in the patent literature 1, one trough for delivery of articles, which is a vibrational feeder, vibrates and transports the articles into a plurality of inclined chutes and then feeds the articles along each of the inclined chutes into two vibrational supply troughs. Thus, the articles are dropped from each of the inclined chutes and divided into two vibrational supply troughs.

The articles are thus vibrated and transported by the vibrational delivery trough and then divided into two vibrational supply troughs along each inclined chute. In this structure, the articles are simply transported downward along the inclined chute without being vibrated. Then, the articles travelling along each chute may fail to be adequately dispersed before dropping into two vibrational supply troughs.

This may be even more apparent when one of the two vibrational supply troughs fails to be driven, in which case the articles may become even more uneven or lean to either side.

The articles are divided into two vibrational supply troughs along the inclined chute and then into each of two weighing hoppers through a corresponding one of the two supply hoppers. When one of these two weighing hoppers alone is selected for an optimal combination by the combinatorial computations, the articles are discharged from the selected weighing hopper. The vibrational delivery trough is then driven to resupply the articles into the weighing hopper thus emptied, and one of the two vibrational supply troughs for the emptied weighing hopper alone is then driven to operate.

When one of the two weighing hoppers alone is selected for an optimal combination, one of the supply troughs alone is driven to operate. Then, disproportion of the articles may become more noticeable between two supply troughs which are supplied with the articles along the inclined chute.

The patent literature 1 fails to discuss any solution to such disproportion of articles when the articles are divided into two vibrational supply troughs along one inclined chute.

To address the issues of the known art, this disclosure is directed to reducing the risk of uneven supply of articles to be weighed when the articles are divided into a plurality of feeders.

### SOLUTIONS TO THE PROBLEMS

To this end, this disclosure provides a combination weighing apparatus comprising the features of claim 1. Preferred embodiments are defined by the subclaims.

1) A combination weighing apparatus disclosed herein has a plurality of groups of components, each one of the groups including:
   a first article feeder that vibrationally transports articles to be weighed;
   a plurality of second article feeders; and
   a plurality of combinational hoppers,
   the plurality of second article feeders each receiving the articles supplied from the first article feeder and vibrationally transporting the articles received,
   the plurality of combinational hoppers suppliable with the articles through the plurality of second article feeders,
   the combination weighing apparatus further having:
      a combination computing unit; and
      a controller that performs discharge control and drive control,
      the combination computing unit being configured to select, for an optimal combination from which the articles should be discharged, a combination of the combinational hoppers containing the articles having a combination weight, which is a summed weight obtained by variously combining weights of the articles in the combinational hoppers of the plurality of groups, that stays within a predetermined range of weights based on a target combination weight,
      the controller, during the discharge control, discharging the articles from the combinational hoppers selected for the optimal combination by the combination computing unit,
      the controller, during the drive control, driving the first article feeder and the second article feeders to feed the combinational hoppers with the articles.

This combination weighing apparatus is further characterized as follows:
the first article feeder, the second article feeders and the combinational hoppers in the plurality of groups are linearly arranged next to one another;
the controller drives the first article feeder and also drives a corresponding one of the second article feeders for an emptied one of the combinational hoppers to feed the emptied one with the articles when any of the combinational hopper discharges the articles and is emptied; and
in the case of a plurality of candidates selectable for the optimal combination, the combination computing unit preferentially selects, for the optimal combination, an optimal combination candidate including a group in which two or more of the second article feeders are driven in order to feed an emptied one of the combinational hoppers with the articles, supposing that the combinational hopper of a selected one of the candidates discharges the articles and is emptied.

The combinational hopper may refer to a weighing hopper alone that measures the weight of articles supplied through the second article feeders or may further include a memory hopper that retains and discharges the articles discharged from the weighing hopper.

In the description earlier, "an optimal combination candidate including a group in which two or more of the second article feeders are driven in order to feed an emptied one of the combinational hoppers with the articles", "two or more of the second article feeders" may be counted as equal to or less than "a plurality of second article feeders in each one of the groups that vibrationally transport the articles the articles received from the first article feeder".

In the combination weighing apparatus disclosed herein, the articles are vibrated by one first article feeder and transported into two or more second articles feeders. The patent literature 1, on the other hand, describes the supply of articles to be weighed into a plurality of article feeders using one inclined chute without vibrational transport of the articles. According to the technology disclosed herein, the articles may be more adequately dispersed than in the known art before arriving at the second article feeders.

When the combinational hoppers of a certain one of the groups are selected for the optimal combination and are emptied after the articles are discharged therefrom, the controller drives the first article feeder of the same group to feed the emptied combination hoppers with the articles and then drives a corresponding one of the second article feeders.

The first article feeder divides the articles into two or more second article feeders. Thus, the articles are divided and supplied into all of the second article feeders when the first article feeder is activated. Yet, a corresponding one of the second article feeders alone is activated to feed the emptied combinational hopper withe the articles, while any other one(s) of the second article feeders, although remaining inactive and irrelevant to the article transport, still inevitably receives the articles from the first article feeder.

When the inactive second article feeder(s) is repeatedly supplied with the articles received from the first article feeder, the articles supplied may become disproportionate between an active one and an inactive one of the second article feeders. In the inactive second article feeder, for example, the oversupplied articles may be jammed or fall off the feeder.

In the case of a plurality of candidates selectable for the optimal combination, the combination weighing apparatus disclosed herein preferentially selects, for the optimal combination, an optimal combination candidate including a group in which two or more of the second article feeders are driven to feed an emptied one of the combinational hopper with the articles, supposing that the hopper is chosen for an optimal combination and is emptied, discharging the articles.

According to the technology disclosed herein, an optimal combination candidate including a group in which two or more of the second article feeders are driven is preferentially selected for the optimal combination. Of different candidates selectable for the optimal combination, for example, this disclosure selects the latter second candidate; a first optimal combination candidate including a group in which one second article feeder is driven, and a second optimal combination candidate including a group in which two or more second article feeders are driven.

As a result of the second candidate being chosen, when the first article feeder is driven to transport the articles into two or more second article feeders to resupply the emptied combinational hopper with the articles, two or more second article feeders are driven to transport the articles, instead of one second article feeder alone. Thus, uneven supply of the articles between different second article feeders may be avoidable when receiving the articles from the first article feeder. This may prevent oversupply of the articles in any one of the second article feeders, further preventing such events that the articles are jammed or fall off the article feeder.

2) In a preferred embodiment of the technology disclosed herein, in the case of a plurality of candidates selectable for the optimal combination each including a group in which two or more of the second articles feeders are driven, the combination computing unit preferentially selects, for the optimal combination, one of the candidates in which the combination weight is more approximate to the target combination weight.

According to this embodiment, in the case of a plurality of candidates selectable for the optimal combination each including a group in which two or more of the second articles feeders are driven, the combination computing unit preferentially selects, for the optimal combination, one of the candidates in which the combination weight is more approximate to the target combination weight. This may conduce to improvements of the combination accuracy.

3) In other embodiments of the technology disclosed herein, in the case of a plurality of candidates selectable for the optimal combination each including a group in which two or more of the second articles feeders are driven, the combination computing unit preferentially selects, for the optimal combination, one of the candidates including a largest number of groups in which two or more of the second article feeders are driven.

According to these embodiments, in the case of a plurality of candidates selectable for the optimal combination each having a group in which two or more of the second articles feeders are driven, the combination computing unit preferentially selects, for the optimal combination, one of the candidates including a largest number of groups in which two or more of the second article feeders are driven. For example, of two optimal combination candidates; a first optimal combination candidate including one group alone in which two or more of the second article feeders are driven, and a second optimal combination candidate including two groups in which two or more of the second article feeders are driven, "two" is the largest number of groups in which two or more of the second article feeders are driven. Thus, the second candidate is chosen for the optimal combination.

As a result of the second candidate being chosen, when the first article feeder is driven to transport the articles into two or more second article feeders to resupply the emptied combinational hopper with the articles, more groups are available in which two or more second article feeders are driven to transport the articles, instead of one second article feeder alone. Thus, uneven supply of the articles between different second article feeders may be more effectively avoidable when receiving the articles from the first article feeder.

4) According to the present invention, in the case of a plurality of candidates selectable for the optimal combination each including a group in which two or more
of the second articles feeders are driven, the combination computing unit preferentially selects, for the
optimal combination, one of the candidates including the combinational hopper left unselected for the optimal combination more often than the combinational hoppers of the other candidates and thus still containing the articles failing to be transported.

According to the present invention, in the case of a plurality of candidates selectable for the optimal combination each including a group in which two or more of the second articles feeders are driven, the combination computing unit preferentially selects, for the optimal combination, one of the candidates including the combinational hopper left unselected for the optimal combination more often than the combinational hoppers of the other candidates and thus still containing the articles failing to be transported. This may reduce the number of combinational hoppers still containing the articles and the amount of articles still remaining in the combinational hoppers.

5) In other embodiments of the technology disclosed herein, in the case of a plurality of candidates selectable for the optimal combination each including a group in which two or more of the second articles feeders are driven, the combination computing unit preferentially selects, for the optimal combination, one of the candidates including a group in which a largest number of the second article feeders are driven.

According to these embodiments, in the case of a plurality of candidates selectable for the optimal combination each including a group in which two or more of the second articles feeders are driven, the combination computing unit preferentially selects, for the optimal combination, one of the candidates including a group in which a largest number of the second article feeders are driven. An example is suggested below, in which one group includes three second article feeders and two candidates are selectable for the optimal combination; a first optimal combination candidate including a group in which two second article feeders are driven, and a second candidate for the optimal combination including a group in which three second article feeders are driven. In this example, the optimal combination to be selected is the second candidate in which three second article feeders are driven; more second article feeders driven than in the other candidate.

As a result of the second candidate being chosen, the first article feeder is driven to transport the articles into, for example, three second article feeders to supply the emptied combinational hopper with the articles, three second article feeders are driven to transport the articles, instead of two second article feeders. By thus activating more second article feeders, uneven supply of the articles between different second article feeders may be avoidable when receiving the articles from the first article feeder.

6) In other embodiments of the technology disclosed herein, the second article feeders in the each one of the groups are three or more second article feeders, the three or more second article feeders are disposed adjacent to one another, and the combination computing unit preferentially selects, for the optimal combination, an optimal combination candidate including a group in which two adjacent ones of the second article feeders are driven as the candidate including a group in which two or more of the second article feeders are driven.

Supposing that one group includes one first article feeder and three second article feeders, and two of the second article feeders are driven when the first article feeder is driven to divide and feed the articles into all three second article feeders, two adjacent ones of the three may preferably be driven, instead of two opposite ones of the three, because the articles may be thus less likely to stay at the transport end of the first article feeder. As a result, the transport of articles may be smoothened and accelerated.

According to the embodiments described so far, the combination computing unit, when selecting, for the optimal combination, an optimal combination candidate including a group in which two or more of the second article feeders are driven, selects an optimal combination candidate including a group in which two adjacent ones of the second article feeders are driven. This may favorably smoothen and accelerate the transport of articles, as compared with driving the second article feeders across one(s) in between. Thus, the articles may be unlikely to become uneven between different ones of the second article feeders.

### EFFECTS OF THE INVENTION

The combination weighing apparatus disclosed herein vibrationally feeds the articles to be weighed into two or more second article feeders using one first article feeder. Thus, the articles may be adequately dispersed and then transported into the second article feeders, unlike the known art in which the articles are not vibrated but are simply thrown into different article feeders along the inclined chute.

In the case of a plurality of candidates selectable for the optimal combination, the combination computing unit of the combination weighing apparatus disclosed herein preferentially selects, for the optimal combination, an optimal combination candidate including a group in which two or more of the second article feeders are driven to feed an emptied one of the combinational hoppers with the articles, supposing that the combinational hopper of a selected one of the candidates discharges the articles and is emptied. When the first article feeder is driven to divide and feed the articles into two or more second article feeders to resupply the emptied combinational hopper with the articles, these second article feeders are driven to transport the articles, instead of one second article feeder. Thus, the articles, when divided and supplied from the first article feeder, may be unlikely to become uneven between the second article feeders. This may prevent oversupply of the articles in any one of the second article feeders, further preventing such events that the articles are jammed or fall off the article feeder.

### BRIEF DESCRIPTION OF THE DRAWINGS

Fig. 1 is a perspective view of a combination weighing apparatus according to an embodiment of this disclosure.
Fig. 2 is a schematic lateral view of the combination weighing apparatus of Fig. 1.
Fig. 3 is a front view of the combination weighing apparatus of Fig. 1.
Fig. 4 is a plan view of the combination weighing apparatus of Fig. 1.
Fig. 5 is schematic block diagram of the configuration of a control system in the combination weighing apparatus of Fig. 1.
Fig. 6 is a flow chart partly illustrating an exemplified processing flow for control.
Fig. 7 is a flow chart partly illustrating the processing flow for control, continued from Fig. 6.
Fig. 8 is a flow chart partly illustrating the processing flow for control, continued from Fig. 7.

### DESCRIPTION OF EMBODIMENTS

Embodiments of the combination weighing apparatus disclosed herein are hereinafter described with reference to the accompanying drawings.

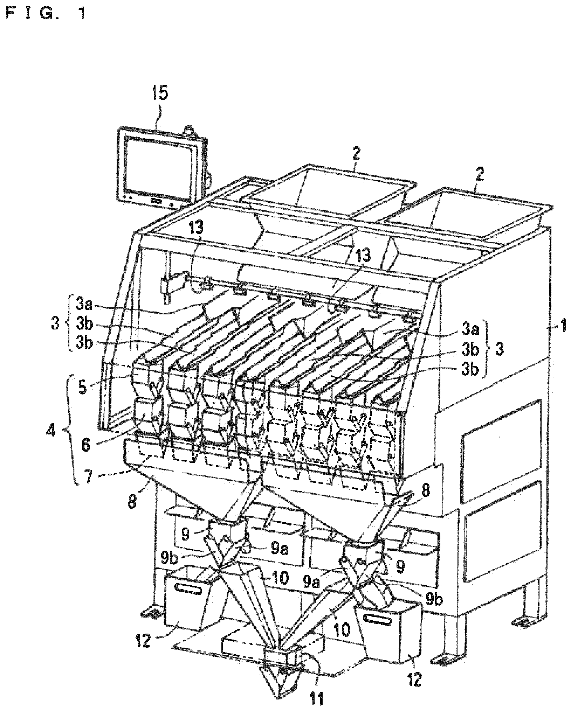

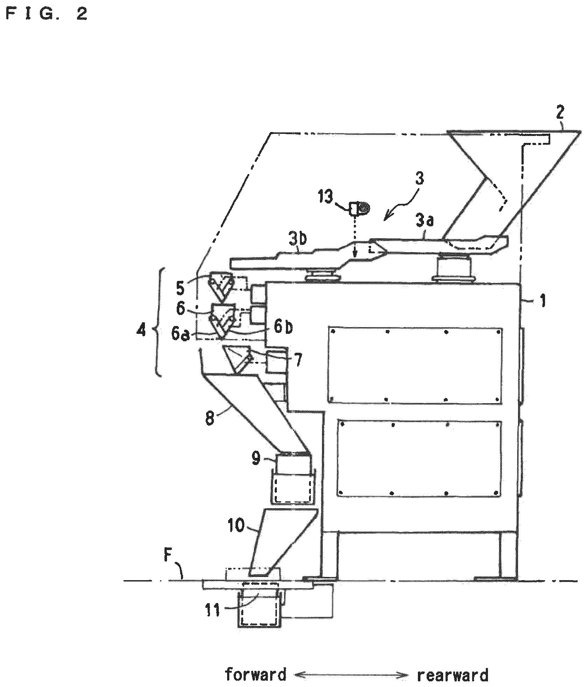

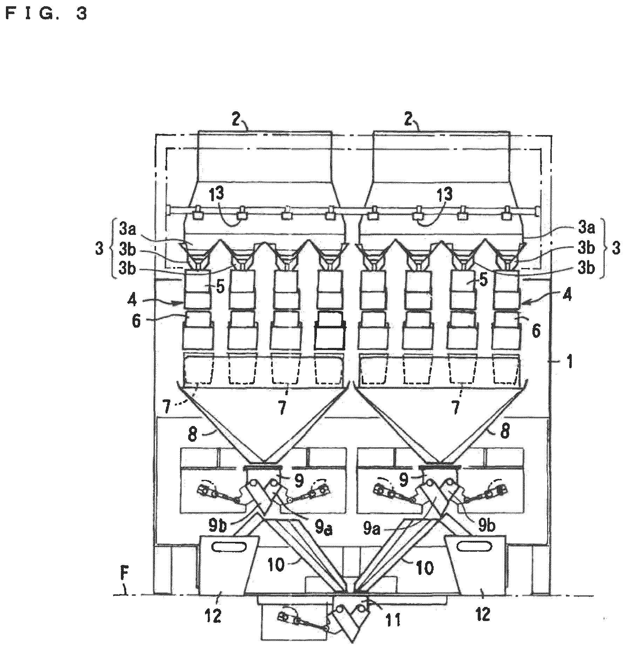

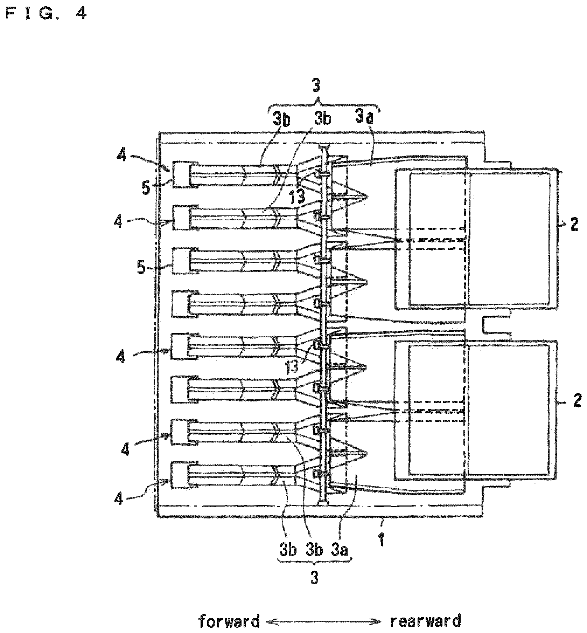

Fig. 1 is a perspective view of a combination weighing apparatus according to an embodiment of this disclosure. Fig. 2 is a schematic lateral view of the combination weighing apparatus of Fig. 1. Fig. 3 is a front view of the combination weighing apparatus of Fig. 1. Fig. 4 is a plan view of the combination weighing apparatus of Fig. 1.

The combination weighing apparatus according to this embodiment collects, combine and weighs target articles, for example, various kinds of food and snacks. This tower-like frame is so structured that allows an operator to climb up and down. This combination weighing apparatus is installed on a floor surface F of a tower-like frame and is used in a packaging line. In the packaging machine, the weighed articles are thrown downward into an unillustrated packaging machine installed beneath the floor surface, where the collected articles are then packed into pouches.

To help the readers understand the structural features of this apparatus, directions on the lateral view of Fig. 2, plan view of Fig. 4 and front view of Fig. 3 are respectively referred to as follows; the left side as front side or forward, and the right side as rear side rearward on Figs. 2 and 4, while the front side as front side or forward, and the back side as rear side or rearward on Fig. 3.

This combination weighing apparatus is equipped with a base 1 having a box-like shape to be installed on the floor surface F. At positions relatively rearward in the upper direction of the base 1 are two retaining hoppers 2 disposed next to each other. A large quantity of articles of the same type or two different types are retainable in these two retaining hoppers 2.

The base 1 has, on its surface, supply units 3; two each for one retaining hopper 2, four supply units 3 in total, which vibrationally transport the articles in the retaining hoppers 2 to the front side. The supply units 3 are each equipped with one first article feeder 3a and two second article feeders 3b. The first article feeder 3a vibrationally transports the articles received from the retaining hopper 2. The second article feeders 3b are arranged next to each other correspondingly to the first article feeder 3a. As illustrated in Fig. 2, the first article feeder 3a and the second article feeders 3b, with their tip ends inclining downward, are tandemly arranged in a staircase pattern. The article feeders 3a and 3b are linear feeders that transport the articles using vibration.

The articles transported out of the retaining hopper 2 from its lower end are vibrated by the first article feeder 3a in the upper stage of the supply unit 3 and then divided into two second article feeders 3b disposed below next to each other. These two article feeders 3b vibrate and transport the supplied articles. In the supply unit 3, the articles received from the first article feeder 3a are divided into two transport paths formed by two second article feeders 3b and are then transported out of these article feeders. The two retaining hoppers 2 are each equipped with two supply units 3. The articles in these two retaining hoppers 2 are divided into and transported out by the eight transport paths in total; four supply units 3 for each retaining hopper (4×2=8).

The patent literature 1 describes the bifurcated supply of articles into different vibratory troughs through one inclined chute. On the other hand, the first article feeder 3a in each of the supply units 3 according to this embodiment is a vibratory feeder that vibrates and transports the target articles. Thus, the articles may be adequately dispersed before arriving at two second article feeders 3b, unlike the known art.

On the front side of the base 1 are eight weighing units 4 to be supplied with the articles transported by the eight transport paths in total of the four supply units 3. These weighing units are laterally arranged next to one another. Two of these weighing units 4 are disposed for one of the supply units 3 having one first article feeder 3a and two second article feeders 3b. The retaining hoppers 2 are each equipped with two supply units 3, therefore, four weighing units 4 are allocated to each of the two retaining hoppers 2.

Thus, the eight weighing units 4 are independently disposed correspondingly to the eight transport paths of the four supply units 4.

The weighing units 4 are essentially structured and configured similarly to the known art. These weighing units are each equipped with a supply hopper 5, a weighing hopper 6, and a memory hopper 7. The supply hopper 5 has a gate allowed to open and close. The supply hopper 5 receives the articles transported from the second article feeders 3b of the supply unit 3 and temporarily retains and then discharges the articles. The weighing hopper 6 also has a gate allowed to open and close. The weighing hopper 6 retains the articles discharged from the supply hopper 5 and then weighs and discharges the articles. The memory hopper 7 also has a gate allowed to open and close. The memory hopper 7 receives the articles weighed by and discharged from the weighing hopper 6 and temporarily retains and then discharges the articles. The supply hopper, weighing hopper and memory hopper are tandemly arranged and vertically stacked in layers.

The base 1 is loaded with mechanisms for vibrating the article feeders 3a and 3b of the supply units 3, gate drivers of the supply hoppers 5, weighing hoppers 6 and memory hoppers 7, and weight sensors that measure weights of the weighing hoppers 6.

In the combination weighing apparatus according to this embodiment, the first article feeders 3a and the second article feeders 3b of each supply unit 3 are linearly arranged next to one another in the lateral direction. In the eight weighing units 4 to be supplied with the articles received from the second article feeders 3b of the supply units 3, the weighing hoppers 6 and the memory hoppers 7 are also linearly arranged next to one another in the lateral direction. Thus, the combination weighing apparatus according to this embodiment is a horizontal-type combination weighing apparatus.

The supply hopper 5 of the weighing unit 4 has, at its lower end, a front gate and a rear gate allowed to open and close at once. The weighing hopper 6, on the other hand, has a front gate 6a and a rear gate 6b allowed to open and close independently from each other, as illustrated in Fig. 2. The weighing hopper 6, by swinging forward its front gate 6a alone to open, directly drops the weighed articles downward. The weighing hopper 6, by swinging inward its rear gate 6b alone to open, throws the weighed articles into the memory hopper 7 below, where the articles are temporarily retained.

The weighing units 4 are each equipped with the memory hopper 7 in addition to the weighing hopper 6. These hoppers are combinational hoppers; target hoppers for the combinatorial computations described later. Thus, more combinational hoppers are available for the combinatorial computations, conducing to a higher accuracy in the combinatorial computations.

In other embodiments of this disclosure, the memory hoppers 7 may be dispensable components.

A pair of first collection chutes 8 are disposed below the weighing hoppers 6 and the memory hoppers 7. These first collection chutes 8 collect the articles discharged from at least either of the weighing or memory hoppers 6 and 7 selected by the combinatorial computations so that their weights stay within a predetermined range of weights. Below the first collection chutes 8 are disposed first collection hoppers 9 that receive and temporarily retain the articles collected by the first collection chutes 8. Further below the first collection hoppers 9 are disposed second collection chutes 10 and a second collection hopper 11. The second collection chutes 10 guide the articles discharged from the first collection hoppers 9 to drop downward, so that the articles are collected at a laterally middle position of the apparatus. The second collection hopper 11 temporarily retains the articles thus collected. The second collection hopper 11 is controlled to open based on a discharge request command outputted from the packaging machine.

The first collection hoppers 9 each have a main gate 9a and a collection gate 9b. These gates are opened and closed independently from each other. Normally, the inner main gate 9a is opened to discharge the articles through the second chute 10 into the second collection hopper 11. For example, the articles may possibly remain undelivered in the weighing hopper(s) 6 or memory hopper(s) 7 that continuously failing to be selected for an optimal combination more than a predetermined number of detections of article retention. In this instance, the articles left in the hopper(s) are collected into the first collection hopper 9, and its outer collection gate 9b is opened to discharge the collected articles into a collection container 12.

In the supply unit 3, the first article feeder 3a is supplied with the articles discharged from the retaining hopper 2, and the articles are vibrated and transported by the first article feeder 3a and then divided into the two second article feeders 3b disposed below next to each other. The articles are then vibrated and transported by these second article feeders 3b into the supply hopper 5 of a corresponding one of the weighing units 4. The articles in the supply hopper 5 are then thrown into a corresponding one of the weighing hoppers 6.

The apparatus has photoelectric sensors 13 in the upper direction of the article feeders 3. These photoelectric sensors 13 serve to detect any article(s) present near the incoming ends of the second article feeders 3b. The first article feeders 3a are driven based on information of detected by these photoelectric sensors. The photoelectric sensor 13 failing to detect any article at the incoming end of at least one of the second article feeders 3b is determined as no article currently being present at the incoming end. Then, the first article feeder 3a is driven until any article is detected by the photoelectric sensor 13 to feed the second article feeder with the articles.

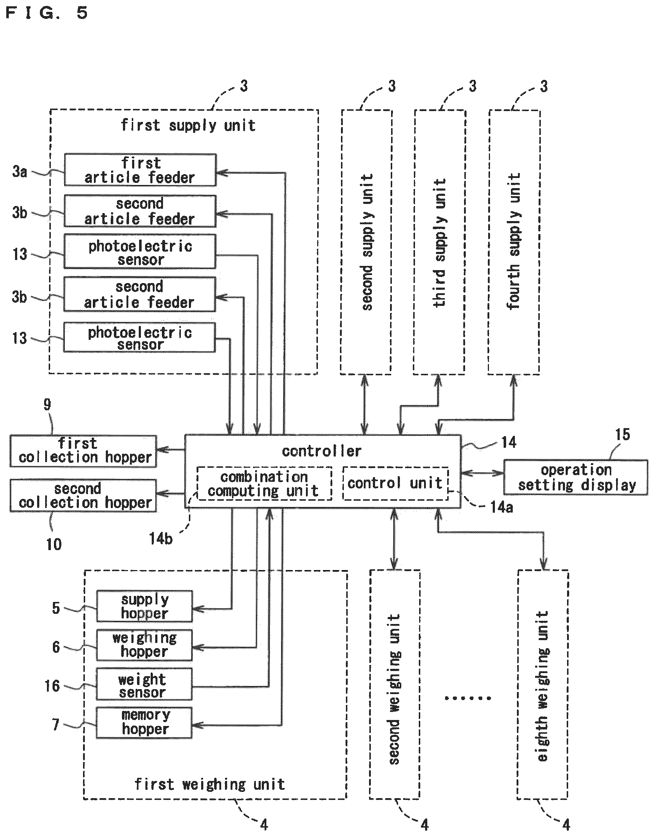

Fig. 5 is schematic block diagram of the configuration of a control system in the combination weighing apparatus of Fig. 1.

In Fig. 5, the supply unit 3 is equipped with the fist article feeder 3a, two second article feeders 3b, and photoelectric sensors 13 that detect the articles at the incoming ends of the second article feeders 3b. There are four supply units 3, which are illustrated in the drawing as first to fourth supply units 3.

The eight weighing units 4 are supplied with the articles to be weighed from the second article feeders 3b of the supply units 3, and these weighing units 4 are illustrated in the drawing as first to eight weighing units 4.

In the base 1 is housed a controller 14 in charge of control of the apparatus components. This controller 14 is connected to an operation setting display 15. This display 15 is allowed to display thereon, for example, measured values, and operation inputs and operation parameter settings for the combination weighing apparatus. The controller 14 receives the detection outputs from the photoelectric sensors 13 of the supply units 3 and weight signals from the weight sensors 16 that measure weights of the weighing hoppers 6.

The controller 14 has a control unit 14a. The control unit 14a controls the operations of the first and second article feeders 3a and 3b of the supply units 3. The control unit 14 also controls the hopper gates to open and close, specifically, the discharge gates of the hoppers 5, 6, 7, 9, 10 and 11 for discharge control of the articles.

The weighing hoppers 6 and the memory hoppers 7 are examples of the combinational hoppers. The controller 14 further has a combination computing unit 14b. The combination computing unit 14b, based on weights detected by the weight sensors 16 of the weighing units 4, selects an optimal combination which is the combination of at least either of the weighing hopper(s) 6 or the memory hopper(s) 7 containing the articles of a combination weight, i.e., summed weight obtained by variously combining weights of the articles in these weighing and memory hoppers 6 and 7, that stays within a predetermined range of weights decided based on a target combination weight. The control unit 14a drives at least either of the weighing hopper(s) 6 or the memory hopper(s) 7 selected for an optimal combination to discharge the articles.

When the memory hopper 7 selected for an optimal combination discharges the articles and is emptied, the control unit 14a drives the upstream weighing hopper 6 to discharge the articles to feed the emptied memory hopper 7 with the articles. When any weighing hopper 6 selected for an optimal combination discharges the articles and is emptied or when any weighing hopper 6 is emptied after discharge of the articles into an emptied one of the memory hopper 7, the control unit 14a drives the upstream supply hopper 5 to discharge the articles to feed the emptied weighing hopper 6 with the articles.

When the supply hopper 5 is emptied after the articles are discharged into the weighing hopper 6, the control unit 14a drives the upstream second article feeder 3b to feed the emptied supply hopper 5 with the articles.

When the photoelectric sensor 13 detects that the articles are supplied into the supply hopper 5, leaving no article at the incoming end of the second article feeder 3b, the control unit 14a drives the first article feeder 3a until any article is detected in order to supply the articles into the second article feeder 3b.

An example is discussed below, in which the first and second weighing units 4 are supplied with the articles from the first supply unit 3 and also from the second article feeders 3b of the first supply unit 3.

Supposing that one of the two weighing hoppers 6 of the first and second weighing units 4 alone, for example, the weighing hopper 6 of the first weighing unit 4 alone discharges the articles and is emptied, this emptied weighing hopper 6 is supplied with the articles received from the supply hopper 5 of the first weighing unit 4. Then, the relevant one of the second article feeders 3b of the first supply unit 3 alone is driven to feed the articles into the supply hopper 5 of the first weighing unit 4 that just discharged the articles into the weighing hopper 6.

When one of the second article feeders 3b of the first supply unit 3 is driven to feed the articles into the supply hopper 5 of the first weighing unit 4, there is no article left at the incoming end of this second article feeder 3b. When the absence of any article is detected by one of the photoelectric sensors 13, the first article feeder 3a continues to be driven to feed the articles into the second article feeder 3b until any article is detected by the photoelectric sensor 13.

When the first article feeder 3a is activated, the articles are divided into two second article feeders 3b adjacently disposed. Thus, the articles are thrown into both of the second article feeders 3b; one of the second article feeder 3b already driven to feed the supply hopper 5, with no article left at its incoming end, and the other second article feeder 3b yet to be driven, still containing the articles at its incoming end.

When the weighing hopper 6 in one of the weighing units 4 of the first and second weighing units 4 alone, for example, the weighing hopper 6 of the first weighing unit 4 alone discharges the articles and is emptied as a result of being repeatedly selected for an optimal combination, one of the second article feeders 3b is repeatedly driven to continue to supply the emptied first weighing unit 4 with the articles. Further, the first article feeder 3a is also repeatedly driven to supply this second article feeder 3b with the articles.

The first article feeder 3a divides the articles into two second article feeders 3b. When the first article feeder 3a is repeatedly driven, therefore, both of the two second article feeders 3b are supplied at once with the articles.

The weighing hopper 6 of the second weighing unit 4 is currently not selected for an optimal combination. Therefore, the second article feeder 3b that supplies the second weighing unit 4 with the articles is yet to be driven, still containing the articles at its incoming end. When the second article feeder 3b, though containing the articles at its incoming end, still continue to be supplied with the articles from the first article feeder 3a, the articles may become uneven between the two second article feeders 3b, inviting such risks that the oversupplied articles may be jammed or fall off the second article feeder 3b.

This embodiment employs the following means in order to prevent the events described above; the articles from the first article feeder 3a being unevenly supplied into two second article feeders 3b, and oversupplied articles being jammed or fall off one of the second article feeders 3b.

The combination weighing apparatus according to this embodiment is equipped with a plurality of groups of components each including: a first article feeder 3a, two second article feeders 3b, two weighing units 4 with two weighing hoppers 6, and two memory hoppers 7. The first article feeder 3a vibrationally transports the articles in the supply unit 3. The second article feeders 3b vibrationally transport the articles supplied from the first article feeder 3a. The weighing hoppers 6 are supplied with the articles through the second article feeders 3b. The memory hoppers 7 are supplied with the articles from the weighing hoppers 6.

In an example illustrated in Fig. 5, one group includes: a supply unit 3 including a first article feeder 3a and two second article feeders 3b that vibrationally transport the articles supplied from the first article feeder 3a; and two weighing units 4 to be supplied with the articles from the second article feeders 3b of the supply unit 3.

Specifically, the apparatus includes four groups of components; one group with a first supply unit 3 and first and second weighing units 4, one group with a second supply unit 3 and third and fourth weighing units 4, one group with a third supply unit 3 and fifth and sixth weighing units 4, and one group with a fourth supply unit 3 and seventh and eighth weighing units 4.

In the description below, a group A includes the first supply unit 3 and first and second weighing units 4, a group B includes the second supply unit 3 and third and fourth weighing units 4, a group C includes the third supply unit 3 and fifth and sixth weighing units 4, and a group D includes the fourth supply unit 3 and seventh and eighth weighing units 4.

In this embodiment, the combination computing unit 14b of the controller 14 operationally functions, as follows. In the case of a plurality of candidates selectable for an optimal combination including at least either of the weighing hopper(s) or the memory hopper(s) 7, the candidates each containing the articles of a combination weight, i.e., summed weight obtained by variously combining weights of the articles in the memory and weighing hoppers 6 and 7, that stays within a predetermined range of weights decided based on a target combination weight, supposing that at least either of the weighing hopper 6 or the memory hopper 7 selected for the optimal combination discharges the articles and is emptied, the combination computing unit 14b preferentially selects, for the optimal combination, an optimal combination candidate including a group in which the second article feeders 3b are both driven to feed the emptied hopper with the articles.

Supposing that, for instance, the articles have been discharged from a hopper of an optimal combination candidate and there are two selectable candidates for the supply of articles into the emptied hopper; a first optimal combination candidate including a group in which one of the second article feeders 3b alone is driven, and a second optimal combination candidate including a group in which the second article feeders 3b are both driven, the combination computing unit preferentially selects, for the optimal combination, the second optimal combination candidate to supply the emptied hopper with the articles.

Supposing that there are a plurality of optimal combination candidates as described in this example, one of the candidates is preferentially selected in which the second article feeders 3b are both driven to feed the emptied hopper with the articles.

When any emptied hopper is resupplied with the articles, the first article feeder 3a is also driven. When the first article feeder 3a is activated, the articles are divided into both of the second article feeders 3b adjacently disposed. In this instance, an optimal combination is preferentially selected in which the second article feeders 3b are both driven. In case one of the second article feeders 3b alone is activated, the articles supplied from the first article feeder 3a are inevitably discharged into the other inactive one of the second article feeders 3b, which may lead to disproportion of the articles between one and the other of the second article feeders 3b. This embodiment, however, may reduce the risk of oversupply of the articles in one of the second article feeders 3b.

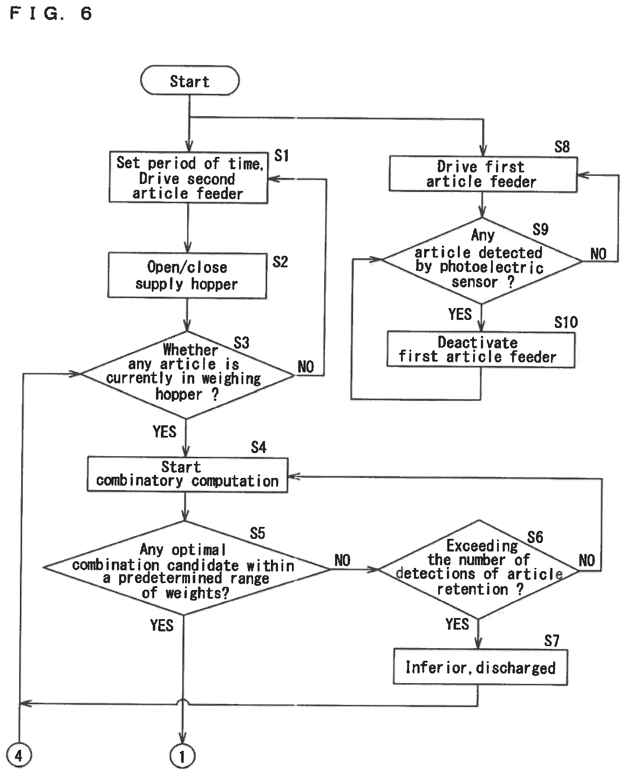

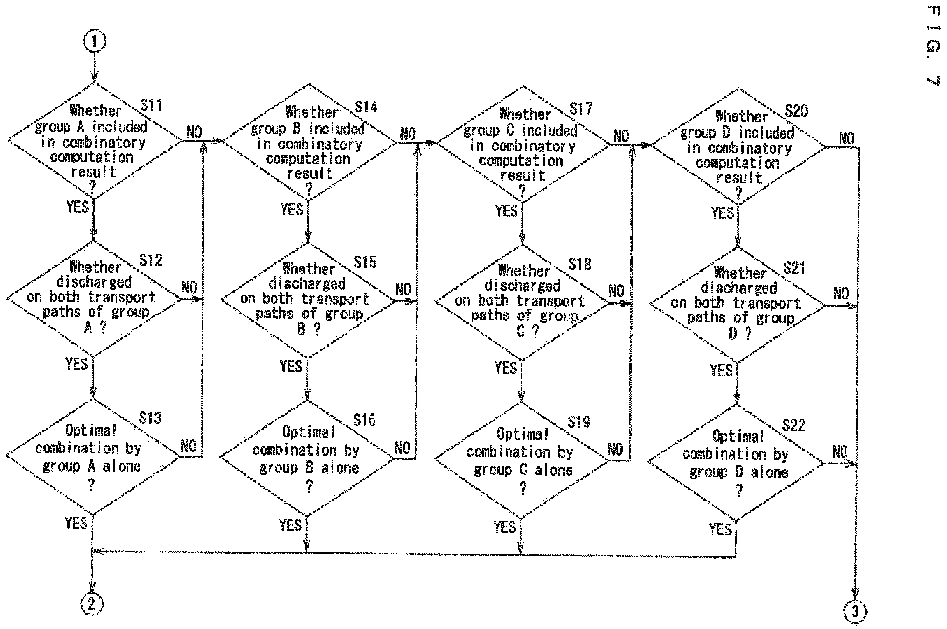

An exemplified control process is hereinafter described with reference to Figs. 6, 7 and 8.

As illustrated in Fig. 6, the first article feeder 3a is driven (step S8) when one of the photoelectric sensors 13 fails to detect any article at the incoming ends of the second article feeders 3b (step S9), while the first article feeder 3a ceases to be driven when the photoelectric sensors 13 that failed to detect any article starts to detect the presence of an article(s) (step S10).

When at least one of the two weighing hoppers 6 discharges the articles and is emptied (step S3), the second article feeder 3b relevant to the emptied weighing hopper is driven over a set period of time to feed the articles into the supply hopper 5 for the empties weighing hopper (step S1), the gate of this supply hopper 5 is opened to discharge the articles into the emptied weighing hopper 6 (step S2).

When the weighing hopper 6 and the memory hopper 7 are supplied with the articles, the combinatory computations start (step S4), in which it is determined whether there is any selectable optimal combination candidate in which at least either of the weighing hopper(s) 6 or the memory hopper(s) 7 is combined, the candidate containing the articles of a combination weight, i.e., summed weight obtained by variously combining weights of the articles in the memory and weighing hoppers 6 and 7, that stays within a predetermined range of weights decided based on a target combination weight (step S5).

In the case of no selectable optimal combination candidate, it is determined whether the number of detections of article retention has exceeded a predetermined number of detections (step S6). This step selects, as an article-retaining hopper, the weighing hopper(s) 6 or the memory hopper(s) 7 repeatedly failing to be selected for an optimal combination in the combinatory computations and retaining the undischarged articles. In step S6, it is determined whether any article-retaining hopper is present that exceeds the predetermined number of detections of article retention. In case such an article-retaining hopper is found to be present, the articles in the hopper are discharged as inferior products (step S7), and the process returns to step S3. When no article-retaining hopper is found that exceeds the predetermined number of detections of article retention, the process returns to step S4.

When step S5 finds an selectable optimal combination candidate, the process proceeds to step S7.

Step S11 determines whether the selectable optimal combination candidate at least includes either of the weighing hopper(s) 6 or the memory hopper(s) 7 of the group A. If not, the process proceeds to step S14. In case either of the weighing hopper(s) 6 or the memory hopper(s) 7 of the group A is found to be included in the selectable optimal combination candidate, it is determined whether the articles are discharged from both of two transport paths of the group A, i.e., two transport paths of the two article feeders 3b of the supply unit 3 (step S12). In case the earlier step determines that the articles are discharged from the hoppers in the two transport paths of the two article feeders 3b of the supply unit 3, the second article feeders 3b in the two transport paths are both driven in order to resupply the emptied hopper with the articles.

Thus, step S12 determines, supposing that the articles are discharged from the hopper(s) of the optimal combination candidate, whether the two second article feeders 3b of the group A are both driven in order to resupply the emptied hopper with the articles.

After the articles are discharged from the hoppers in two transport paths of the group A, the two second article feeders 3b of the group A are both driven in order to feed the articles into the emptied hoppers in these transport paths. If one of the second article feeders 2b alone is driven and the first article feeder 3a starts to feed the articles into both of the second article feeders 2b, the other second article feeder 2b may be oversupplied with the articles. This embodiment, however, may successfully avoid such an oversupply.

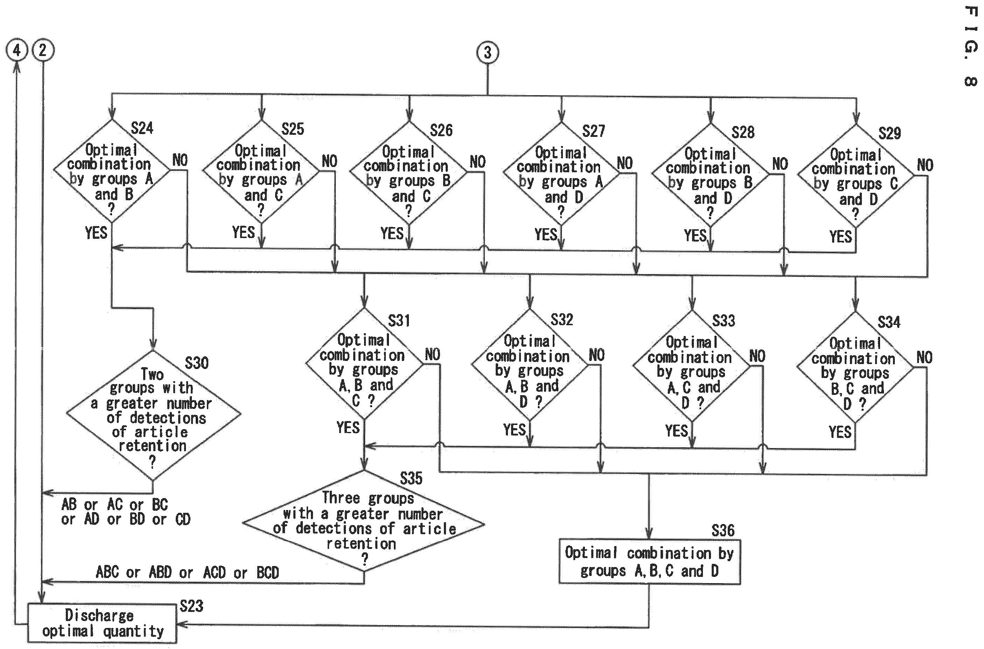

When step S12 determines that the articles are discharged from both of the hoppers in two transport paths of the group A, it is determined whether the group A alone is allowed to provide an optimal combination that stays within a predetermined range of weights (step S13). When the earlier step determines that the group A alone provides an optimal combination, the process proceeds to step S23 of Fig. 8 to discharge an optimal quantity of articles from the optimal combination hoppers of the group A. Then, the process returns to step S3 of Fig. 6.

When step S12 determines otherwise, i.e., the articles are discharged from the hoppers in one of the two transport paths of the group A instead of both of the two transport paths or when step S13 determines that the group A alone fails to provide an optimal combination, the process proceeds to step S14.

It is determined in step S14 whether either of the weighing hopper(s) 6 or the memory hopper(s) 7 of the group B is included in the selectable optimal combination candidate. If this step determines that the hopper(s) is not included, the process proceeds to step S17. When step S14 determines otherwise, it is then determined whether the articles are discharged from the hoppers in both of the two transport paths of the group B (step S15).

When step S15 determines that the articles are discharged from the hoppers in both of the two transport paths of the group B, it is then determined whether the group B alone is allowed to provide an optimal combination within a predetermined range of weights (step S16). When this step determines that the group B alone provides an optimal group, the process proceeds to step S23 of Fig. 8, in which an optimal quantity of articles are discharged from the optimal combination hoppers of the group B. Then, the process returns to step S3 of Fig. 6.

When step S15 determines that the articles are not discharged from the hoppers in both of the two transport paths of the group B, i.e., the articles are discharged from the hoppers in one of the transport paths alone of the group B or when step S16 determines that the group B alone fails to provide an optimal combination, the process proceeds to step S17.

It is determined in step S17 whether either of the weighing hopper(s) or the memory hopper(s) 7 of the group C is included in the selectable optimal combination candidate. When step S17 determines that the hopper(s) is not included, the process proceeds to step S20. When this step determines otherwise, it is then determined whether the articles are discharged from the hoppers in both of the two transport paths of the group C (step S18).

When step S17 determines that the articles are discharged from the hoppers in both of the two transport paths of the group C, it is then determined whether the group C alone is allowed to provide an optimal combination within a predetermined range of weights (step S19). When this step determines that the group C alone provides the optimal combination, the process proceeds to step S23 of Fig. 8, in which an optimal quantity of articles are discharged from the optimal combination hoppers of the group C. Then, the process returns to step S3 of Fig. 6.

When step S18 determines that the articles are not discharged from the hoppers in both of the two transport paths of the group C, i.e., the articles are discharged from the hoppers in one of the transport paths alone of the group C or when step S19 determines that the group C alone fails to provide an optimal combination, the process proceeds to step S20.

It is determined in step S20 whether either of the weighing hopper(s) or the memory hopper(s) 7 of the group D is not included in the selectable optimal combination candidate. When step S20 determines that the hopper(s) is not included, the process proceeds to the process illustrated in Fig. 8. When this step determines otherwise, it is then determined whether the articles are discharged from the hoppers in both of the two transport paths of the group D (step S21).

When step S21 determines that the articles are discharged from the hoppers in both of the two transport paths of the group D, it is then determined whether the group D alone is allowed to provide an optimal combination within a predetermined range of weights (step S22). When this step determines that the group D alone provides an optimal combination, the process proceeds to step S23 of Fig. 8, in which an optimal quantity of articles are discharged from the optimal combination hoppers of the group D. Then, the process returns to step S3 of Fig. 6.

When step S21 determines that the articles are not discharged from the hoppers in both of the two transport paths of the group D, i.e., the articles are discharged from the hoppers in one of the transport paths alone of the group D or when step S22 determines that the group D alone fails to provide an optimal combination, the process proceeds to the step of Fig. 8.

In the control process described thus far, in the case of a plurality of optimal combination candidates, it is determined whether two second article feeders 3b are both driven for each of the groups A, B, C and D or each of the groups is allowed to independently provide an optimal combination. When it is determined that the second article feeders 3b are both driven and each of the groups independently provides an optimal combination, the relevant optimal combination candidate is preferentially selected, and the articles are discharged from the hoppers of the selected optimal combination.

With reference to Fig. 8, whether at least either of the weighing hopper(s) 6 or the memory hopper(s) 7 in two groups, i.e., the groups A and B, groups A and C, groups B and C, groups A and D, groups B and D, and groups C and D are selectable for an optimal combination. When it is determined so, the process proceeds to step S30, in which it is determined which of the above-mentioned groups are two groups including a hopper(s) with a greater number of detections of article retention. Any optimal combination candidate for two groups with a greater number of detections of article retention is then selected, and an optimal quantity of articles are discharged from the hoppers of the optimal combination (step S23). Then, the process returns to step S3 of Fig. 6.

In case one group alone fails to provide an optimal combination in the control process described thus far, it is determined whether paired groups; groups A and B, groups A and C, groups B and C, groups A and D, groups B and D, and groups C and D are each allowed to provide an optimal combination. In the case of only one optimal combination candidate for the paired groups, the only optimal combination candidate is preferentially selected, and the articles are discharged from the selected hoppers.

In the case of a plurality of optimal combination candidates for the paired groups, one of the candidates including a hopper(s) with a greater number of detections of article retention; hoppers continuously unselected in the combinatorial computations and failing to discharge the articles, is preferentially selected for an optimal combination. Then, the articles are discharged from the selected optimal combination hoppers. This may successfully reduce the number of hoppers unselected and thus still containing the articles.

In case the paired groups fail to provide an optimal combination in steps S24 to S29, it is determined, as illustrated in steps S31 to S34, whether either of the weighing hopper(s) 6 or the memory hopper(s) 7 in three groups; groups A, B and C, groups A, B and D, groups A, C and D, and groups B, C and D, are each allowed to provide an optimal combination. When it is determined so, the process proceeds to step S35. In step S35, it is determined which of the above-mentioned groups are three groups including a hopper(s) with a greater number of detections of article retention. Any optimal combination candidate for three groups with a greater number of detections of article retention is then preferentially selected. Then, the articles are discharged from the optimal combinational hoppers (step S23). The process returns to step S3 of Fig. 6.

In case one group alone or two groups combined fail to provide an optimal combination for two or more optimal combination candidates, it is determined whether groups A, B and C, groups A, B and D, groups A, C and D, and groups B, C and D are each allowed to provide an optimal combination. In case one optimal combination candidate alone is available from any three groups combined, this optimal combination candidate is preferentially selected, and the articles are discharged from the selected hoppers.

In the case of a plurality of optimal combination candidates for the three groups combined, one of the candidates including a hopper(s) with a greater number of detections of article retention is preferentially selected, and the articles are discharged from the selected optimal combination hoppers.

In case the three groups combined fail to provide an optimal combination in steps S31 to S34, the four combined groups A, B, C and D provide an optimal combination (step S36). Then, the articles are discharged from the optimal combination hoppers of the four combined groups A, B, C and D (S3), and the process returns to step S3 of Fig. 6.

In this embodiment, supposing that there is any selectable optimal combination candidate and that the articles are discharged from the hoppers of the selected optimal combination candidate to empty the hoppers, such a candidate is preferentially selected that allows the second article feeders 3b of the two transport paths are both driven to feed the emptied hoppers with the articles. When the articles are supplied from the first supply feeder 3a, an inactive one of the second article feeders 3b may be oversupplied with the articles, which, however, may be preventable by driving both of the second article feeders 3b instead of one second article feeder 3b alone to feed the emptied hoppers with the articles.

This may avoid such events that the articles are jammed or fall off the second article feeder 3b currently inactive.

Further, this embodiment discusses one group or two or three groups combined in which the second article feeders 3b in two transport paths are both driven. In case a plurality of optimal combination candidates are available by thus combining different groups, any candidate including a hopper(s) with a greater number of detections of article retention is preferentially selected, which may reduce the number of hoppers with a large number of detections of article retention and thus reducing the risk of articles remaining undelivered.

This embodiment describes the preferential selection of any optimal combination candidate including a hopper(s) with a greater number of detections of article retention. In other embodiments of this disclosure, supposing that there are a plurality of optimal combination candidates including a group(s) in which two second article feeders 3b are both driven, any candidate having a combination weight more approximate to a target combination weight may be preferentially selected for an optimal combination, instead of any candidate including a hopper(s) with a greater number of detections of article retention. The combination accuracy may be improved by thus selecting any candidate having a combination weight more approximate to a target combination weight.

In other embodiments of this disclosure, an optimal combination candidate may be selected based on the number of detections of article retention and the degree of approximation of the candidate's combination weight relative to the target combination weight.

In the case of a plurality of optimal combination candidates including a group(s) in which the second article feeders 3b of two transport paths are both driven, for example, in the case of a plurality of optimal combination candidates including a hopper(s) with a greater number of detections of article retention than a predetermined number of detections to resupply an emptied hopper after the article discharge of any optimal combination candidate that has been selected, an optimal combination candidate having a combination weight more approximate to a target combination weight may be selected. In the case of a plurality of optimal combination candidates each having a combination weight more approximate to a target combination weight within a predetermined range of weights, a candidate including a hopper with a greatest number of detections of article retention may be selected for an optimal combination.

In other embodiments of this disclosure, supposing that the articles are discharged from the hoppers of an optimal combination candidate that has been selected to empty the hoppers and there are a plurality of optimal combination candidates in which the second article feeders 3b of two transport paths are both driven to feed the emptied hoppers with the articles, an optimal combination candidate including a largest number of groups in which the second article feeders 3b of two transport paths are both driven may be preferentially selected.

Supposing that the articles are discharged from the hoppers of an optimal combination candidate that has been selected to empty the hoppers and that there are a plurality of optimal combination candidates; a first candidate including two groups; groups A and B, as groups in which the second article feeders 3b of two transport paths are both driven to feed the emptied hoppers with the articles, and a second candidate including three groups; groups A, B and C, as groups in which the second article feeders 3b of two transport paths are both driven to feed the emptied hoppers with the articles, the second candidate including three groups in which the second article feeders 3b of two transport paths are both driven is preferentially selected for an optimal combination.

In the case of two or more candidates having the same largest number of groups, an optimal combination candidate may be selected based on the degree of approximation of the candidate's combination weight to a target combination weight. For example, a candidate with a greater number of detections of article retention or a candidate having a combination weight more approximate to a target combination weight may be selected for an optimal combination.

In the embodiments described thus far, the supply units 3 each have two second article feeders 3b adjacently disposed correspondingly to one first article feeder 3a. In other embodiments of this disclosure, the supply units 3 may each have three or more second article feeders 3b adjacently disposed correspondingly to one first article feeder 3a. In this instance, the articles are supplied from these three or more second article feeders 3b of each supply unit 3. Thus, three or more weighing units 4 are disposed for each supply unit 3 correspondingly to the number of the second article feeders 3b.

An example is discussed below, in which each supply unit 3 has three second article feeders 3b adjacently disposed for one first article feeder 3a, and three weighing units 4 are disposed for each supply unit 3 and are supplied with the articles from these three second article feeders 3b.

In the structure in which three second article feeders 3b are disposed next to each another for one first article feeder 3a, when the first article feeder 3a is driven to resupply the articles into any hopper that has been emptied of a selected optimal combination and the second article feeders 3b of two transport paths are both driven, the number of articles possibly left at the transport end of the first article feeder 3a may reduce by driving adjacent ones of the three second article feeders 3b, instead of driving the second article feeders 3b at two opposite ends. This may accelerate the transport of articles.

Supposing that a hopper(s) of an optimal combination candidate that has been selected discharges the articles and is emptied, and there are a plurality of optimal combination candidates including a group(s) in which the second article feeders 3b of two transport paths are both driven in order to resupply the emptied hopper with the articles in a structure where three or more weighing units 4 are disposed correspondingly for the supply units 3 each having one first article feeder 3a and three or more second article feeders 3b adjacently disposed, a candidate in which two adjacent ones of the second article feeders 3b are driven may preferably be selected for an optimal combination.

In other embodiments of this disclosure, supposing that a hopper(s) of an optimal combination candidate that has been selected discharges the articles and is emptied, and there are a plurality of optimal combination candidates including a group(s) in which the first article feeder 3a is driven and the second article feeders 3b of the transport paths are driven in order to resupply the emptied hopper with the articles in a structure where three or more weighing units 4 are disposed correspondingly for the supply units 3 each having one first article feeder 3a and three or more second article feeders 3b adjacently disposed, a candidate including a group in which a largest number of second article feeders 3b are driven may be preferentially selected for an optimal combination.

An example is discussed below, in which the combination weighing apparatus includes a plurality of groups, in each of which three or more weighing units 4 are disposed correspondingly for the supply units 3 each having one first article feeder 3a and three or more second article feeders 3b adjacently disposed. Supposing that a hopper(s) of an optimal combination candidate that has been selected discharges the articles and is emptied, and there are a plurality of optimal combination candidates; a first candidate in which three second article feeders 3b are driven in order to resupply the emptied hopper with the articles; and a second candidate in which two second article feeders 3b are driven in order to resupply the emptied hopper with the articles, the first candidate in which a larger number of (three) second article feeders 3b are driven may be preferentially selected for an optimal combination.

In the case of a plurality of optimal combination candidates including groups in which the same largest number of second article feeders 3b are driven, one of the candidates may be selected based on the number of detections of article retention and the degree of approximation of the candidate's combination weight to the target combination weight. For optimal combination candidates in which the same largest number of second article feeders 3b are driven, one of the candidates with a greater number of detections of article retention or one of the candidates having a combination weight more approximate to a target combination weight may be selected for an optimal combination.

For optimal combination candidates in which the same largest number of second article feeders 3b are driven, one of the candidates including more groups in which a largest number of second article feeders are driven may be selected for an optimal combination.

In the case of a plurality of optimal combination candidates, as described so far, an optimal combination may be selected from a plurality of candidates based on at least one of the following; number of detections of article retention, degree of approximation of a combination weight to a target combination weight, largest number of groups in which two or more second article feeders 3b are driven, and largest number of second article feeders 3b to be driven.

### REFERENCE SIGNS LIST

- 2: retaining hopper
- 3: supply unit
- 3a: first article feeder
- 3b: second article feeder
- 4: weighing unit
- 5: supply hopper
- 6: weighing hopper
- 7: memory hopper
- 13: photoelectric sensor
- 14: controller
- 14a: control unit
- 14b: combination computing unit

## Claims

1. A combination weighing apparatus, comprising a plurality of groups (A, B, C, D) of components, each one of the groups (A, B, C, D) including:
a first article feeder (3a) that vibrationally transports articles to be weighed;
a plurality of second article feeders (3b); and
a plurality of combinational hoppers,
the plurality of second article feeders (3b) each receiving the articles supplied from the first article feeder (3a) and vibrationally transporting the articles received,
the plurality of combinational hoppers suppliable with the articles through the plurality of second article feeders (3b),
the combination weighing apparatus further comprising:
a combination computing unit (14b); and
a controller (14) that performs discharge control and drive control,
the combination computing unit (14b) being configured to select, for an optimal combination from which the articles should be discharged, a combination of the combinational hoppers containing the articles having a combination weight, which is a summed weight obtained by variously combining weights of the articles in the combinational hoppers of the plurality of groups (A, B, C, D), that stays within a predetermined range of weights based on a target combination weight,
the controller (14), during the discharge control, discharging the articles from the combinational hoppers selected for the optimal combination by the combination computing unit (14b),
the controller (14), during the drive control, driving the first article feeder (3a) and the second article feeders (3b) to feed the combinational hoppers with the articles,
the first article feeder (3a), the second article feeders (3b) and the combinational hoppers in the plurality of groups (A, B, C, D) being linearly arranged next to one another,
the controller (14) driving the first article feeder (3a) and further driving a corresponding one of the second article feeders (3b) for an emptied one of the combinational hoppers to feed the emptied one with the articles when any of the combinational hopper discharges the articles and is emptied,
in the case of a plurality of candidates selectable for the optimal combination, the combination computing unit (14b) preferentially selecting, for the optimal combination, an optimal combination candidate including a group (A, B, C, D) in which two or more of the second article feeders (3b) are driven in order to feed an emptied one of the combinational hoppers with the articles, supposing that the combinational hopper of a selected one of the candidates discharges the articles and is emptied,
**characterized in that** in the case of a plurality of candidates selectable for the optimal combination each including a group (A, B, C, D) in which two or more of the second articles feeders (3b) are driven, the combination computing unit (14b) preferentially selects, for the optimal combination, one of the candidates including the combinational hopper left unselected for the optimal combination more often than the combinational hoppers of the other candidates and thus still containing the articles failing to be transported.

2. The combination weighing apparatus according to claim 1, wherein
in the case of a plurality of candidates selectable for the optimal combination each including a group (A, B, C, D) in which two or more of the second articles feeders are driven, the combination computing unit (14b) preferentially selects, for the optimal combination, one of the candidates in which the combination weight is more approximate to the target combination weight.

3. The combination weighing apparatus according to claim 1, wherein
in the case of a plurality of candidates selectable for the optimal combination each including a group (A, B, C, D) in which two or more of the second articles feeders are driven, the combination computing unit (14b) preferentially selects, for the optimal combination, one of the candidates including a largest number of groups (A, B, C, D) in which two or more of the second article feeders (3b) are driven.

4. The combination weighing apparatus according to claim 1, wherein
in the case of a plurality of candidates selectable for the optimal combination each including a group (A, B, C, D) in which two or more of the second articles feeders are driven, the combination computing unit (14b) preferentially selects, for the optimal combination, one of the candidates including a group (A, B, C, D) in which a largest number of the second article feeders are (3b) driven.

5. The combination weighing apparatus according to claim 1, wherein
the second article feeders (3b) in the each one of the groups (A, B, C, D) are three or more second article feeders (3b),
the three or more second article feeders (3b) are disposed adjacent to one another, and
the combination computing unit (14b) preferentially selects, for the optimal combination, an optimal combination candidate including a group (A, B, C, D) in which two adjacent ones of the second article feeders (3b) are driven as the candidate including a group (A, B, C, D) in which two or more of the second article feeders (3b) are driven.

## Patentansprüche

1. Kombinationswiegevorrichtung, umfassend eine Vielzahl von Gruppen (A, B, C, D) von Komponenten, wobei jede der Gruppen (A, B, C, D) umfasst:
einen ersten Artikelzuführer (3a), der zu wiegende Artikel durch Vibration transportiert; eine Vielzahl zweiter Artikelzuführer (3b),
eine Vielzahl von Kombinationstrichtern,
wobei die Vielzahl zweiter Artikelzuführer (3b) jeweils die vom ersten Artikelzuführer (3a) zugeführten Artikel aufnimmt und die aufgenommenen Artikel durch Vibration transportiert,
wobei die Vielzahl von Kombinationstrichtern mit den Artikeln durch die Vielzahl zweiter Artikelzuführer (3b) zu befüllen ist,
wobei die Kombinationswiegevorrichtung ferner umfasst:
eine Kombinationsberechnungseinheit (14b), und
eine Steuerung (14), die eine Abgabesteuerung und eine Antriebssteuerung durchführt,
wobei die Kombinationsberechnungseinheit (14b) so konfiguriert ist, dass sie für eine optimale Kombination, aus der die Artikel abgegeben werden sollen, eine Kombination der Kombinationstrichter auswählt, die die Artikel mit einem Kombinationsgewicht enthält, das ein summiertes Gewicht ist, das durch unterschiedliches Kombinieren von Gewichten der Artikel in den Kombinationstrichtern der Vielzahl von Gruppen (A, B, C, D) erhalten wird, das basierend auf einem Zielkombinationsgewicht innerhalb eines vorbestimmten Gewichtsbereichs bleibt,
wobei die Steuerung (14) während der Abgabesteuerung die Artikel aus den Kombinationstrichtern abgibt, die durch die Kombinationsberechnungseinheit (14b) für die optimale Kombination ausgewählt wurden,
wobei die Steuerung (14) während der Antriebssteuerung den ersten Artikelzuführer (3a) und die zweiten Artikelzuführer (3b) antreibt, um die Kombinationstrichter mit den Artikeln zu befüllen,
wobei der erste Artikelzuführer (3a), die zweiten Artikelzuführer (3b) und die Kombinationstrichter in der Vielzahl von Gruppen (A, B, C, D) linear nebeneinander angeordnet sind,
wobei die Steuerung (14) den ersten Artikelzuführer (3a) antreibt und ferner einen entsprechenden der zweiten Artikelzuführer (3b) für einen geleerten der Kombinationstrichter antreibt, um den geleerten mit den Artikeln zu befüllen, wenn einer der Kombinationstrichter die Artikel abgibt und leer ist,
wobei im Fall einer Vielzahl von Kandidaten, die für die optimale Kombination auswählbar sind, die Kombinationsberechnungseinheit (14b) vorzugsweise für die optimale Kombination einen optimalen Kombinationskandidaten auswählt, der eine Gruppe (A, B, C, D) umfasst, in der zwei oder mehr der zweiten Artikelzuführer (3b) angetrieben werden, um einen geleerten der Kombinationstrichter mit den Artikeln zu befüllen, unter der Annahme, dass der Kombinationstrichter eines ausgewählten der Kandidaten die Artikel abgibt und leer ist,
**dadurch gekennzeichnet, dass** im Fall einer Vielzahl von Kandidaten, die für die optimale Kombination auswählbar sind, jeder eine Gruppe (A, B, C, D) umfasst, in der zwei oder mehr der zweiten Artikelzuführer (3b) angetrieben werden, die Kombinationsberechnungseinheit (14b) vorzugsweise für die optimale Kombination einen der Kandidaten auswählt, der den Kombinationstrichter umfasst, der für die optimale Kombination öfter als die Kombinationstrichter der anderen Kandidaten nicht ausgewählt wurde und somit immer noch die Artikel enthält, die nicht transportiert werden können.

2. Kombinationswiegevorrichtung nach Anspruch 1, wobei
im Fall einer Vielzahl von Kandidaten, die für die optimale Kombination auswählbar sind, jeder eine Gruppe (A, B, C, D) umfasst, in der zwei oder mehr der zweiten Artikelzuführer angetrieben werden, die Kombinationsberechnungseinheit (14b) vorzugsweise für die optimale Kombination einen der Kandidaten auswählt, in dem das Kombinationsgewicht dem Zielkombinationsgewicht näher kommt.

3. Kombinationswiegevorrichtung nach Anspruch 1, wobei
im Fall einer Vielzahl von Kandidaten, die für die optimale Kombination auswählbar sind, jeder eine Gruppe (A, B, C, D) umfasst, in der zwei oder mehr der zweiten Artikelzuführer angetrieben werden, die Kombinationsberechnungseinheit (14b) vorzugsweise für die optimale Kombination einen der Kandidaten auswählt, der eine größte Anzahl von Gruppen (A, B, C, D) umfasst, in denen zwei oder mehr der zweiten Artikelzuführer (3b) angetrieben werden.

4. Kombinationswiegevorrichtung nach Anspruch 1, wobei
im Fall einer Vielzahl von Kandidaten, die für die optimale Kombination auswählbar sind, jeder eine Gruppe (A, B, C, D) umfasst, in der zwei oder mehr der zweiten Artikelzuführer angetrieben werden, die Kombinationsberechnungseinheit (14b) vorzugsweise für die optimale Kombination einen der Kandidaten auswählt, der eine Gruppe (A, B, C, D) umfasst, in der eine größte Anzahl der zweiten Artikelzuführer (3b) angetrieben wird.

5. Kombinationswiegevorrichtung nach Anspruch 1, wobei
die zweiten Artikelzuführer (3b) in jeder der Gruppen (A, B, C, D) drei oder mehr zweite Artikelzuführer (3b) sind,
die drei oder mehr zweiten Artikelzuführer (3b) benachbart zueinander angeordnet sind, und
die Kombinationsberechnungseinheit (14b) vorzugsweise für die optimale Kombination einen optimalen Kombinationskandidaten, der eine Gruppe (A, B, C, D) umfasst, in der zwei benachbarte der zweiten Artikelzuführer (3b) angetrieben werden, als den Kandidaten auswählt, der eine Gruppe (A, B, C, D) umfasst, in der zwei oder mehr der zweiten Artikelzuführer (3b) angetrieben werden.

## Revendications

1. Appareil de pesage combiné, comportant une pluralité de groupes (A, B, C, D) de composants, chacun des groupes (A, B, C, D) incluant :
un premier dispositif d'alimentation en articles (3a) qui transporte des articles à peser de manière vibratoire ;
une pluralité de seconds dispositifs d'alimentation en articles (3b) ; et
une pluralité de trémies combinatoires,
les dispositifs de la pluralité de seconds dispositifs d'alimentation en articles (3b) recevant chacun les articles fournis à partir du premier dispositif d'alimentation en articles (3a) et transportant les articles reçus de manière vibratoire,
les trémies de la pluralité de trémies combinatoires pouvant être alimentées avec les articles par l'intermédiaire de la pluralité de seconds dispositifs d'alimentation en articles (3b),
l'appareil de pesage combiné comportant en outre :
une unité de calcul de combinaison (14b) ; et
une commande (14) qui réalise une commande de déchargement et une commande d'entraînement,
l'unité de calcul de combinaison (14b) étant configurée pour sélectionner, pour une combinaison optimale à partir de laquelle les articles doivent être déchargés, une combinaison des trémies combinatoires contenant les articles ayant un poids combiné, qui est un poids additionné obtenu en combinant de manière diverse des poids des articles dans les trémies combinatoires de la pluralité de groupes (A, B, C, D), qui reste dans les limites d'une plage de poids prédéterminée sur la base d'un poids combiné cible,
la commande (14), pendant la commande de déchargement, déchargeant les articles des trémies combinatoires sélectionnées pour la combinaison optimale par l'unité de calcul de combinaison (14b),
la commande (14), pendant la commande d'entraînement, entraînant le premier dispositif d'alimentation en articles (3a) et le second dispositif d'alimentation en articles (3b) pour alimenter les trémies combinatoires avec les articles,
le premier dispositif d'alimentation en articles (3a), le second dispositif d'alimentation en articles (3b) et les trémies combinatoires dans la pluralité de groupes (A, B, C, D) étant agencés linéairement les uns à côté des autres,
la commande (14) entraînant le premier dispositif d'alimentation en articles (3a) et entraînant en outre un dispositif correspondant parmi les seconds dispositifs d'alimentation en articles (3b) pour une trémie vidée parmi les trémies combinatoires afin d'alimenter la trémie vidée avec les articles lorsque l'une quelconque des trémies combinatoires décharge les articles et est vidée,
dans le cas d'une pluralité de candidats pouvant être sélectionnés pour la combinaison optimale, l'unité de calcul de combinaison (14b) sélectionne préférentiellement, pour la combinaison optimale, un candidat de combinaison optimale incluant un groupe (A, B, C, D) dans lequel deux des seconds dispositifs d'alimentation en articles (3b) ou plus sont entraînés afin d'alimenter une trémie vidée parmi les trémies combinatoires avec les articles, en supposant que la trémie combinatoire d'un candidat sélectionné parmi les candidats décharge les articles et est vidée,
**caractérisé en ce que**, dans le cas d'une pluralité de candidats pouvant être sélectionnés pour la combinaison optimale, chacun incluant un groupe (A, B, C, D) dans lequel deux des seconds dispositifs d'alimentation en articles (3b) ou plus sont entraînés, l'unité de calcul de combinaison (14b) sélectionne préférentiellement, pour la combinaison optimale, l'un des candidats incluant la trémie combinatoire laissée non sélectionnée pour la combinaison optimale plus souvent que les trémies combinatoires des autres candidats et contient donc toujours les articles en échec de transport.

2. Appareil de pesage combiné selon la revendication 1, dans lequel
dans le cas d'une pluralité de candidats pouvant être sélectionnés pour la combinaison optimale, chacun incluant un groupe (A, B, C, D) dans lequel deux des seconds dispositifs d'alimentation en articles ou plus sont entraînés, l'unité de calcul de combinaison (14b) sélectionne préférentiellement, pour la combinaison optimale, l'un des candidats dans lequel le poids de combinaison est plus proche du poids de combinaison cible.

3. Appareil de pesage combiné selon la revendication 1, dans lequel
dans le cas d'une pluralité de candidats pouvant être sélectionnés pour la combinaison optimale, chacun incluant un groupe (A, B, C, D) dans lequel deux des seconds dispositifs d'alimentation en articles ou plus sont entraînés, l'unité de calcul de combinaison (14b) sélectionne préférentiellement, pour la combinaison optimale, l'un des candidats incluant le plus grand nombre de groupes (A, B, C, D) dans lesquels deux des seconds dispositifs d'alimentation en articles (3b) ou plus sont entraînés.

4. Appareil de pesage combiné selon la revendication 1, dans lequel
dans le cas d'une pluralité de candidats pouvant être sélectionnés pour la combinaison optimale, chacun incluant un groupe (A, B, C, D) dans lequel deux des seconds dispositifs d'alimentation en articles ou plus sont entraînés, l'unité de calcul de combinaison (14b) sélectionne préférentiellement, pour la combinaison optimale, l'un des candidats incluant un groupe (A, B, C, D) dans lequel le plus grand nombre des seconds dispositifs d'alimentation en articles (3b) sont entraînés.

5. Appareil de pesage combiné selon la revendication 1, dans lequel
les seconds dispositifs d'alimentation en articles (3b) dans chacun des groupes (A, B, C, D) sont trois seconds dispositifs d'alimentation en articles (3b) ou plus,
les trois seconds dispositifs d'alimentation en articles (3b) ou plus sont disposés au voisinage les uns aux autres, et
l'unité de calcul de combinaison (14b) sélectionne préférentiellement, pour la combinaison optimale, un candidat de combinaison optimale incluant un groupe (A, B, C, D) dans lequel deux dispositifs adjacents parmi les seconds dispositifs d'alimentation en articles (3b) sont entraînés en tant que candidat incluant un groupe (A, B, C, D) dans lequel deux des seconds dispositifs d'alimentation en articles (3b) ou plus sont entraînés.
